# FASCICULE DE BREVET EUROPEEN

(11) **EP 1 027 536 B1**
(45) Date de publication et mention de la délivrance du brevet: **25.08.2004**
(21) Numéro de dépôt: 99940234.0
(22) Date de dépôt: 25.08.1999
(51) Int. Cl.: F02M 61/16

(54) **INJECTEUR DE CARBURANT FLUIDE POUR MOTEUR A COMBUSTION INTERNE**
EINSPRITZVENTIL FÜR FLÜSSIGEN BRENNSTOFF FÜR BRENNKRAFTMASCHINE
FLUID FUEL INJECTOR FOR INTERNAL COMBUSTION ENGINE

(30) Priorité: 28.08.1998 FR 9810843
(43) Date de publication de la demande: 16.08.2000
(73) Titulaire: Johnson Controls Automotive Electronics, 95520 Osny (FR)
(72) Inventeur: ESTEVENON, Christine, F-95520 Osny (FR); CROCHE, Richard, F-95520 Osny (FR)
(74) Mandataire: Fruchard, Guy
(86) Numéro de dépôt international: PCT/FR1999/002040
(87) Numéro de publication internationale: WO 2000/012893

(56) Documents cités:
- DE-A- 19 625 059
- FR-A- 2 773 851
- US-A- 5 288 025
- PATENT ABSTRACTS OF JAPAN vol. 097, no. 003, 31 mars 1997 (1997-03-31) & JP 08 296531 A (NIPPONDENSO CO LTD), 12 novembre 1996 (1996-11-12)

## Description

La présente invention concerne les injecteurs de carburant à l'état de fluide, et notamment liquide, destinés à injecter directement le carburant dans une chambre de combustion d'un moteur à allumage commandé. Elle est applicable notamment à l'injection d'essence, mais elle peut également être adaptée à d'autres carburants liquides, tels que les carburants à base d'alcool et le gaz de pétrole liquéfié.

On connaît du document US-A-5 288 025 un injecteur de carburant pour l'injection de carburant dans une chambre de combustion de moteur à allumage commandé, comprenant un corps d'injecteur ayant un passage axial, un élément monobloc en forme de diabolo fixé dans le corps d'injecteur dans une partie aval du passage axial et prenant appui sur un épaulement reliant le passage axial à un chambrage auquel est fixé l'élément monobloc, l'élément monobloc comprenant un siège disposé entre un orifice de diffusion et un alésage axial et coopérant avec la partie aval du corps d'injecteur pour définir une chambre d'amenée de carburant ayant une pluralité de perçages faisant communiquer la chambre d'amenée de carburant avec l'alésage immédiatement en amont du siège et débouchant tangentiellement dans l'alésage, et une aiguille s'étendant dans le passage axial et l'alésage axial et présentant un jeu annulaire avec le passage axial, cette aiguille étant montée pour coulisser dans l'alésage axial et étant déplaçable axialement entre une première position axiale dans laquelle elle prend appui sur le siège, et une seconde position axiale dans laquelle elle est espacée du siège.

Dans l'injecteur décrit dans ce document, la chambre d'amenée de carburant est alimentée radialement de sorte qu'il est nécessaire de prévoir une chambre d'alimentation entourant l'injecteur. Il en résulte un encombrement important de l'injecteur, ce qui est incompatible avec la place disponible sur les moteurs actuels, en particulier lorsqu'ils comportent plus de deux soupapes par cylindre.

On connaît également du document JP-A-0 829 6531 un injecteur comportant une pièce en forme de diabolo comportant une rainure d'alimentation axiale. Toutefois, dans l'injecteur selon ce document la pièce en forme de diabolo est sertie à l'intérieur du corps et est totalement traversée par l'aiguille dont l'extrémité inférieure prend appui sur un siège réalisé dans le corps lui-même. Lors du sertissage du diabolo dans le corps, il existe un risque de déformation de la pièce en forme de diabolo, de sorte que l'aiguille est alors décentrée par rapport au siège, ce qui nuit à une commande précise de l'injection.

Selon l'invention on propose un injecteur du type décrit dans le document US-A-5 288 025, caractérisé en ce que le jeu annulaire entre l'aiguille et le passage axial forme une chambre d'alimentation en carburant reliée à la chambre d'amenée de carburant par des passages obliques réalisés dans l'élément monobloc pour assurer une alimentation de la chambre d'amenée de carburant.

Ainsi, on assure une alimentation de la chambre d'amenée de carburant par le passage axial de l'injecteur de sorte que l'encombrement de l'injecteur est réduit tout en assurant, au moyen de l'alésage axial, un centrage précis de l'aiguille par rapport au siège.

Selon d'autres aspects de l'invention, l'utilisation de perçages à section circulaire, habituellement au nombre de deux à dix, présente l'avantage d'une perte de charge réduite, la section circulaire étant celle qui présente le rayon hydraulique le plus élevé à section donnée.

Les perçages peuvent être dans un plan orthogonal à l'axe de l'aiguille. Il est cependant possible de les incliner d'amont en aval. Cette possibilité donne un degré de liberté qui s'ajoute à ceux sur le nombre et le diamètre des perçages. Une même ébauche décolletée peut ainsi être adaptée à des injecteurs différents.

Les caractéristiques ci-dessus ainsi que d'autres apparaîtront mieux à la lecture de la description qui suit de modes particuliers de réalisation, donnés à titre d'exemples non limitatifs. La description se réfère aux dessins qui l'accompagnent, dans lesquels :
- la figure 1 est une vue d'ensemble d'un injecteur auquel est appliquée l'invention;
- la figure 2 est une vue en élévation et en demi-coupe de l'élément monobloc de l'injecteur montré en figures 1 et 2 ;
- la figure 3 est une vue de dessus du guide de la figure 2 ;
- les figures 4 et 5 sont des vues en coupe suivant les lignes IV-IV et V-V de la figure 3 ;
- la figure 6 est une vue en coupe suivant la ligne VI-VI de la figure 2.

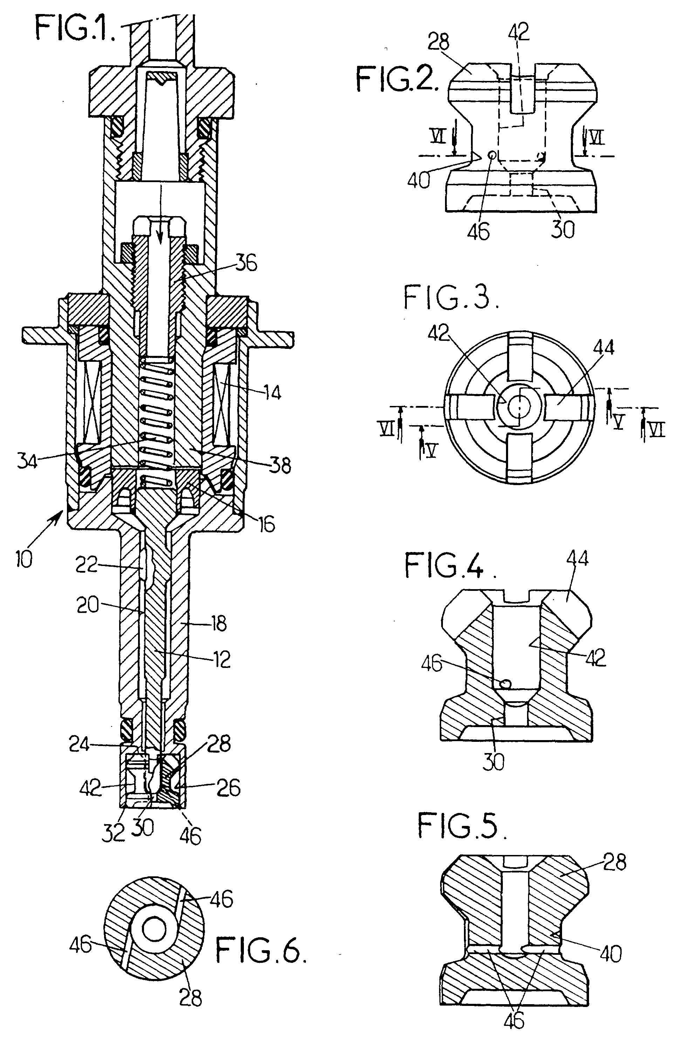

L'injecteur dont la constitution générale est montrée en figure 1 comporte un corps 10, en plusieurs pièces assemblées à l'intérieur duquel se trouve une aiguille 12 déplaçable axialement par une bobine 14. Pour cela, l'aiguille est fixée à un anneau 16 en matériau ferro-magnétique. L'aiguille pourrait aussi bien être commandée électriquement par d'autres moyens, par exemple par un empilement de pastilles piézo-électrique, ou même être commandée par pression de fluide.

Dans la partie terminale 18 du corps 10 est ménagée un alésage 20 de guidage de renflements 22 de l'aiguille 12. L'alésage 20 est raccordé par un épaulement 24 à un chambrage 26 auquel est fixé un élément monobloc 28. Dans le cas illustré sur la figure 1, l'élément 28 est fixé par une soudure circulaire 32, réalisée par laser ou par faisceau d'électrons.

L'élément 28 constitue un guide pour l'aiguille. Dans ce but, il est percé d'un alésage 42 de diamètre tel que l'aiguille 12 puisse y glisser à frottement doux. Cet alésage débouche au-dessus d'une portée d'aiguille, entourant l'entrée d'un trou de diffusion 30.

L'élément d'obturation de l'injecteur est constitué, dans le cas illustré, par l'extrémité de l'aiguille 12. La portée sur laquelle s'appuie l'aiguille est par exemple de forme conique, alors que l'extrémité de l'aiguille présente, dans sa zone d'appui, une forme de segment sphérique. La pointe de la partie terminale de l'aiguille peut être conique, pour réduire le risque de cavitation.

Un ressort 34 comprimé entre la face arrière de l'aiguille 12 et un embout 36, dont la position est ajustable dans un but de réglage, tend à appuyer l'aiguille 12 contre la portée. La bobine 14 permet de déplacer l'aiguille, contre l'action du ressort 34, dans une limite fixée par la venue en butée de l'anneau 16 contre un manchon fixe 38, qui peut être constitué en matériau ferro-magnétique pour compléter le circuit magnétique de commande.

L'élément monobloc 28 sera généralement constitué en acier et fabriqué par décolletage, usinage de ses passages internes, polissage (par exemple électrochimique) et traitement de surface ou à coeur. Etant donné son caractère monobloc, on peut obtenir une précision élevée sur la localisation relative de ses différentes surfaces.

L'élément 28 a une forme générale de diabolo. Entre ses parties terminales amont et aval, de diamètre tel que l'élément s'engage à frottement doux dans le chambrage 26, est ménagée une gorge 40 (figure 2). Dans sa partie amont sont découpées plusieurs rainures d'alimentation obliques 44, au nombre de quatre dans le cas illustré, qui débouchent dans la gorge 40. Un chanfrein tronconique peut être prévu entre la face plane amont de l'élément 28 et sa partie cylindrique pour plus de progressivité.

La gorge 40 communique avec le trou 42 par des perçages 46 à section circulaire, également répartis angulairement, au nombre de deux dans le cas illustré. Ces perçages sont orientés de façon à déboucher tangentiellement dans le trou 42, dans l'intervalle annulaire qui reste libre entre la ligne d'appui de l'aiguille sur sa portée et la partie cylindrique de l'aiguille, lorsque l'aiguille est appliquée sur la portée. Pratiquement, les perçages déboucheront en général juste au-dessus de la portée (figures 4 et 5).

La présence de la gorge 40 réduit la longueur des perçages 46, qui doivent cependant conserver une longueur suffisante pour provoquer la mise en rotation du carburant en amont de la portée. Pour ne pas donner une longueur excessive aux perçages, le rapport entre le diamètre de la gorge 40 et celui de l'alésage 42 sera généralement d'environ 2. Dans la pratique, on donnera généralement aux perçages une longueur supérieure à leur diamètre. Le volume mort encre le débouché des perçages et le siège est très faible, de sorte qu'il y a peu de carburant pulvérisé grossièrement, sans effet de vortex.

On voit que le trajet d'arrivée du carburant en amont de la portée d'aiguille comprend successivement :
- un jeu annulaire entre l'aiguille 12 et la paroi interne de la partie terminale 18,
- les rainures 44 et la gorge 40,
- les perçages 46, au nombre de deux à dix.

La disposition qui vient d'être décrite présente de nombreux avantages. L'amenée de combustible s'effectue de façon parfaitement symétrique, du fait du centrage de l'élément 28 dans le chambrage 26. Les caractéristiques de débit de l'injecteur peuvent être modifiées de façon très simple, en prévoyant simplement plusieurs jeux différents de perçages 46 et/ou de diamètres de trou de pulvérisation 30. En effet, le jeu annulaire n'a pas d'effet appréciable sur le débit que peut fournir l'injecteur.

Au lieu d'être placés dans un plan orthogonal à l'axe, les perçages peuvent présenter une inclinaison vers le bas allant jusqu'à 45°, ce qui donne un paramètre d'ajustage supplémentaire.

## Revendications

1. Injecteur de carburant pour l'injection de carburant dans une chambre de combustion de moteur à allumage commandé, comprenant un corps d'injecteur (10) ayant un passage axial (20), un élément monobloc (28) en forme de diabolo fixé dans le corps d'injecteur dans une partie aval du passage axial (20) et prenant appui sur un épaulement (24) reliant le passage axial (20) à un chambrage (26) auquel est fixé l'élément monobloc, l'élément monobloc comprenant un siège disposé entre un orifice de diffusion (30) et un alésage axial (42) et coopérant avec la partie aval du corps d'injecteur pour définir une chambre d'amenée de carburant ayant une pluralité de perçages (46) faisant communiquer la chambre d'amenée de carburant avec l'alésage immédiatement en amont du siège et débouchant tangentiellement dans l'alésage, et une aiguille (12) s'étendant dans le passage axial (20) et l'alésage axial (42), et présentant un jeu annulaire avec le passage axial (20), **caractérisé en ce que** le jeu annulaire entre l'aiguille (12) et le passage axial (20) forme une chambre d'alimentation en carburant reliée à la chambre d'amenée de carburant par des passages obliques (44) réalisés dans l'élément monobloc pour assurer une alimentation de la chambre d'amenée de carburant.

2. Injecteur selon la revendication 1, **caractérisé en ce que** les perçages ont une longueur supérieure à leur diamètre.

3. Injecteur selon la revendication 1 ou 2, **caractérisé en ce que** le diamètre interne de la chambre est d'environ deux fois le diamètre de l'alésage.

4. Injecteur selon la revendication 1, 2 ou 3, **caractérisé en ce que** les perçages sont au nombre de deux à dix.

5. Injecteur selon l'une quelconque des revendications 1 à 4, **caractérisé en ce que** les perçages sont dans un plan orthogonal à l'axe de l'aiguille.

6. Injecteur selon l'une quelconque des revendications 1 à 4, **caractérisé en ce que** les perçages présentent une inclinaison vers le bas ne dépassant pas 45°.

7. Injecteur selon l'une quelconque des revendications 1 à 6, **caractérisé en ce que** les perçages débouchent dans l'alésage juste au-dessus du siège.

8. Injecteur selon l'une quelconque des revendications 1 à 7, **caractérisé en ce que** les passages obliques sont constitués par plusieurs rainures d'alimentation obliques (44) découpées dans la partie amont de l'élément monobloc pour déboucher dans une gorge (40) de l'élément monobloc, délimitant la chambre d'amenée.

9. Injecteur selon la revendication 8, **caractérisé par** un chanfrein tronconique prévu entre une face plane amont de l'élément monobloc (28) et une partie cylindrique.

10. Injecteur selon l'une quelconque des revendications 1 à 9, **caractérisé en ce que** les passages obliques sont régulièrement répartis angulairement.

## Patentansprüche

1. Kraftstoffdüse zum Einspritzen von Kraftstoff in eine Verbrennungskammer eines Motors mit gesteuertem Zünden, die einen Düsenkörper (10) umfasst, der einen axialen Durchgang (20), ein einstückiges Element (28) mit Doppelkegelrollenform hat, das in dem Düsenkörper in einem Teil stromabwärts von der axialen Passage (20) befestigt ist und auf einem Ansatz (24) aufliegt, der den axialen Durchgang (20) mit einer Absenkung (26) verbindet, an der das einstückige Element befestigt ist, wobei das einstückige Element einen Sitz umfasst, der zwischen einer Verteilungsöffnung (30) und einer axialen Feinbohrung (42) angeordnet ist und mit dem stromabwärts liegenden Teil des Düsenkörpers zusammenarbeitet, um eine Kraftstoffzuführkammer mit einer Vielzahl von Bohrungen (46) zu definieren, die die Kraftstoffzuführkammer mit der Feinbohrung gleich stromaufwärts von dem Sitz verbindet und tangential in die Feinbohrung mündet, und eine Nadel (12), die sich in den axialen Durchgang (20) und die axiale Feinbohrung (42) erstreckt und ein ringförmiges Spiel mit dem axialen Durchgang (20) aufweist, **dadurch gekennzeichnet, dass** das ringförmige Spiel zwischen der Nadel (12) und dem axialen Durchgang (20) eine Kraftstoffversorgungskammer bildet, die mit der Kraftstoffzuführkammer über schräge Durchgänge (44) verbunden ist, die in dem einstückigen Element hergestellt sind, um eine Versorgung der Kraftstoffzuführkammer sicherzustellen.

2. Düse nach Anspruch 1, **dadurch gekennzeichnet, dass** die Bohrungen eine Länge haben, die größer ist als ihr Durchmesser.

3. Düse nach Anspruch 1 oder 2, **dadurch gekennzeichnet, dass** der Innendurchmesser der Kammer etwa zweimal dem Durchmesser der Feinbohrung entspricht.

4. Düse nach Anspruch 1, 2 oder 3, **dadurch gekennzeichnet, dass** die Anzahl der Bohrungen zwei bis zehn beträgt.

5. Düse nach einem der Ansprüche 1 bis 4, **dadurch gekennzeichnet, dass** die Bohrungen in einer zur Achse der Nadel orthogonalen Ebene liegen.

6. Düse nach einem der Ansprüche 1 bis 4, **dadurch gekennzeichnet, dass** die Bohrungen eine Neigung nach unten aufweisen, die 45° nicht überschreitet.

7. Düse nach einem der Ansprüche 1 bis 6, **dadurch gekennzeichnet, dass** die Bohrungen in die Feinbohrung knapp über der Auflage münden.

8. Düse nach einem der Ansprüche 1 bis 7, **dadurch gekennzeichnet, dass** die schrägen Durchgänge aus mehreren schrägen Zuführrillen (44) bestehen, die in dem stromaufwärts des einstückigen Elements liegenden Teil geschnitten sind, um in eine Hohlkehle (40) des einstückigen Elements zu münden, das die Zuführkammer abgrenzt.

9. Düse nach Anspruch 8, **gekennzeichnet durch** eine kegelstumpfartige Fase, die zwischen einer ebenen Fläche stromaufwärts des einstückigen Elements (28) und einem zylindrischen Teil vorgesehen ist.

10. Düse nach einem der Ansprüche 1 bis 9, **dadurch gekennzeichnet, dass** die schrägen Durchgänge regelmäßig winkelig verteilt sind.

## Claims

1. A fuel injector for injecting fuel into a combustion chamber of a controlled ignition engine, the injector comprising an injector body (10) having an axial passage (20), a one-piece dualcone-shaped element (28) secured in the injector body in a downstream portion of the axial passage (20) and bearing on a shoulder (24) connecting the axial passage (20) to a chamber (16) to which the one-piece element is secured, the one-piece element comprising a seat extending between a spray orifice (30) and an axial bore (42)and cooperating with the downstream portion of the injector body to define a fuel feed chamber having a plurality of bores (46) connecting the fuel feed chamber with the bore immediately upstream the seat and opening out tangentially into the bore, and a needle (12) extending in the axial passage (20) and the axial bore (43) and having an annular play with the axial passage (20), **characterized in that** the annular play between the needle (12) and the axial bore (20) forms a fuel feeding chamber connected to the fuel feed chamber by sloping passages (44) extending in the one-piece element for performing a feeding of the fuel feed chamber.

2. An injector according to claim 1, **characterized in that** the bores are of length greater than their diameter.

3. An injector according to claim 1 or 2, **characterized in that** the inside diameter of the chamber is about twice the diameter of the bores.

4. An injector according to claim 1, 2, or 3, **characterized in that** there are two to ten bores.

5. An injector according to any one of claims 1 to 4, **characterized in that** the bores lie in a plane orthogonal to the axis of the needle.

6. An injector according to any one of claims 1 to 4, **characterized in that** the bores slope downwards at an angle not exceeding 45°.

7. An injector according to any one of claims 1 to 6, **characterized in that** the bores open out into the hole immediately above the seat.

8. An injector according to any one of claims 1 to 7, **characterized in that** the sloping passages are constituted by a plurality of sloping feed notches (44) cut out in the upstream portion of the one-piece element and opening out into a groove (40) of the one-piece element that defines the feed chamber.

9. An injector according to claim 8, **characterized by** a frustoconical chamber being provided between an upstream plane face of the one-piece element (28) and a cylindrical portion.

10. An injector according to anyone of claims 1 to 9, **characterized in that** the sloping passages are regularly distributed angularly.
